# EUROPEAN PATENT APPLICATION

(11) **EP 1 300 239 A1**
(43) Date of publication of application: **09.04.2003**
(21) Application number: 01123752.6
(22) Date of filing: 04.10.2001
(51) Int. Cl.: B32B 27/32, C08J 5/18, B65D 65/40

(54) **Non-oriented polyproylene film**

(71) Applicant: Borealis Technology OY, 06201 Porvoo (FI)
(72) Inventor: The designation of the inventor has not yet been filed
(74) Representative: VA TECH Patente GmbH & Co

(57) **Abstract**

The invention relates to a non-oriented polypropylene film comprised of a polypropylene composition which has an increased stereoregularity, crystallisation temperature and a broad molecular weight distribution.
The inventive films have reduced water vapour transmission rates and are applicable for food and non-food packaging applications.

## Description

The invention relates to a non-oriented polypropylene film with reduced water vapour transmission rate comprised of a polypropylene composition.

Polypropylene films are used in many commercial applications. One particularly important application is the packaging of food products. Films employed in the food packaging industry are chosen and/or designed to provide characteristics necessary for proper food containment. Such characteristics include water vapour barrier properties, oxygen and gas barrier properties and flavour and aroma barrier properties. These improved barrier properties are advantageous also in non-food packaging applications, for example for the production of blister packages containing pharmaceutical products, detergents or other moisture-sensitive articles.

Polypropylene is a polymer commonly employed in the manufacture of films used in the food packaging industry. In the case of multilayer films, polypropylene is typically used in the base or core layer. Often the polypropylene layer is modified to obtain desired characteristics which are not inherent in unmodified polypropylene. For example, resin modifiers and/or additives may be blended with the polypropylene.

US 5,667,902 teaches that a substantial increase in water vapour barrier properties is achieved by adding up to 8 to 9 wt% of hydrocarbon resin to the polymer base material. Additional improvements in water vapour barrier properties are only small when adding more than 9 wt% of hydrocarbon resin.

WO 96/02388 discloses biaxially oriented polypropylene (BOPP) films from highly crystalline polypropylene and a moisture barrier improving amount of a polyterpene resin.
The addition of moisture barrier improving compounds however has the disadvantage of being rather costly and sharply increases the raw material price. It also leads to a reduced toughness of the produced film.

### Monoaxially oriented PP film (MOPP)

Based on a cast film, a solid-state orientation step below the melting temperature is applied before winding. The resulting films (used e.g. for adhesive tapes or packaging tapes) have a higher crystallinity and stiffness, which goes along with reduced WVTR as compared to cast or roll stack films. A disadvantage of such films is the severe anisotropy of mechanical properties, the limited transparency caused by oriented crystals and a strong tendency to split in processing direction. Moreover, the cost for a setup for MOPP production is already significantly higher than for a standard cast film unit.

### Biaxially oriented PP film (BOPP)

Two main technologies are used for this process, which are described in detail in A. Ajji & M.M. Dumoulin, *Biaxially oriented polypropylene (BOPP) process,* in: J. Karger-Kocsis (Ed.) *Polypropylene: An A-Z Reference,* Kluwer, Dordrecht **1999,** 60-67. Orientation and properties are determined by the draw ratio and details of the process; the films have generally the highest crystallinity and stiffness achievable. The main disadvantages of the BOPP process are the high requirements to the polymers used for this process (a rather high molecular weight and broad molecular weight distribution combined with limited isotacticity are required) and the dimension and cost of the necessary machines, which exceed those for every other technology for the production of PP film.

While oriented polypropylene films (OPP) are known for their inherent moisture barrier properties, non-oriented polypropylene films have only a limited barrier function against water vapour and even less so against oxygen or carbon dioxide. In case of oriented films, these properties are greatly improved - however, at the price of significantly higher production costs and a certain brittleness as well as strongly anisotropic mechanical properties and shrinkage.. Due to these disadvantages non-oriented polypropylene films are gradually gaining in importance over OPP because of their lower machinery and conversion costs.

It is therefore the object of the invention to provide a non-oriented polypropylene film comprised of a polypropylene composition which film has good mechanical properties, processability and improved water vapour barrier properties.

This object is achieved by a polypropylene composition being comprised of a propylene homopolymer and/or a propylene random copolymer which comprises up to 1.5 wt% of one or more C₄-C₈ α-olefins and/or ethylene,
which polypropylene composition has an isotacticity 2 0.96,
a crystallisation temperature of T_{c} ≥ 120 °C (determined by DSC according to ISO 3146) and a shear thinning index SHI (0/50) ≥ 10 (calculated from the flow curve at 200 °C).

### Definition of terms and measurement methods

### Isotacticity

Isotacticity is determined by FTIR measurement and calculated as peak ratio A₉₉₈/A₉₇₃ (described in T.Sundell, H. Fagerholm & H. Crozier, *Isotacticity determination of polypropylene using FT-Raman spectroscopy,* Polymer 37, 1996, 3227-31).

### Crystallisation temperature T_{c}

Crystallisation temperatures are determined by DSC measurement according to ISO 3146 at a cooling rate of 10 K/min after a first heating to 200 °C.

### Shear thinning index SHI (0/50)

The shear thinning index SHI is calculated from the flow curve η(σ) at 200 °C - which can be determined with a capillary rheometer according to ISO 11443 or calculated from the complex shear viscosity determined with a plate-plate rheometer according to ISO 6271-10 using the well-known "Cox-Merz rule" relating the shear viscosity to the dynamic viscosity as described in W.P. Cox & E.H. Merz, J.Polym.Sci. 28(1958) 619-623. The SHI (0/50) is defined as the ratio between the zero shear viscosity (η₀) and the viscosity at a stress (σ) value of 50000 Pa.

Generally, the shear thinning index is proportional to the broadness of the molecular weight distribution (MWD) of the polymer.
At very high values it can reflect the bimodality of the molecular weight distribution (i.e. the MWD curve shows two maxima or one maximum and a pronounced shoulder). For reasons of processability and homogeneity the higher molecular weight tail will be limited in practice.

### MFR

The melt flow rates were measured with a load of 2.16 kg at 230 °C. The melt flow rate (MFR) is that quantity of polymer in grams which the test apparatus standardised to DIN 53 735 extrudes within 10 minutes at a temperature of 230 °C under a weight of 2.16 kg.

### Comonomer contents

Comonomer contents were calculated from polymerisation parameters, i.e. the monomer consumption.

### Film properties

All film properties were determined on film samples with a thickness of 50 µm after 4 days storage at 23 °C.

### Water vapour transmission rate WVTR

Water vapour transmission rates are determined under tropical conditions (38 °C, 90 % rel. humidity) according to DIN 53122/1.
Water vapour transmission rates are determined on 50 µm cast films.

### Haze

Haze was determined according to ASTM D 1003-92.

### Tensile Modulus

Tensile Modulus was determined according to DIN 53 457.

According to the present invention the polypropylene composition has an isotacticity ≥ 0.96,. preferably ≥ 0.97, more preferably ≥ 0.98.

The higher the isotacticity the higher is the crystallinity of the polypropylene composition. With increasing crystallinity of the polypropylene composition the stiffness of the film also increases. Generally, a higher crystallinity will mean higher density and, subsequently, lower water vapour transmission rate. In cast films, the crystallinity potential of a specific material is, however, only partially utilised due to the high cooling rates in the process. Moreover, a too high crystallinity can lead to brittleness of the film and to problems in transparency and gloss of the film.

According to the present invention the polypropylene composition has a crystallisation temperature Tc ≥ 120 °C, preferably ≥ 123 °C, more preferably ≥ 125 °C.

For non-nucleated polypropylenes, the crystallisation temperature can be correlated both to the molecular weight distribution of the polymer and to the final crystallinity achieved. An increased content of high molecular weight molecules will normally increase the crystallisation temperature, which will also result in an increased crystallinity. The extent of these effects is, however, depending on details of the molecular weight distribution and the molecular structure as well as - for the final crystallinity - on the type and conditions of processing. Furthermore, an increased crystallinity will generally lead to reduced WVTR and increased stiffness in case of films. If, however, this crystallinity increase goes along with coarsening or anisotropy of the formed crystalline morphology it will lead to brittleness of the film, thus limiting the applicability.

According to the present invention the polypropylene composition has a shear thinning index SHI (0/50) ≥ 10, preferably ≥ 12, more preferably ≥ 15.

SHI is a measure for the processing behaviour of a polymer with higher values indicating a broad to bimodal molecular weight distribution. It has surprisingly been found, that a higher shear thinning index corresponds with a decrease in water vapour transmission rates.

According to an advantageous embodiment of the present invention the polypropylene composition is comprised of a propylene random copolymer which comprises 99.7 wt% of propylene and 0.3 wt% of ethylene.

Random copolymers of propylene and ethylene have the additional advantage of good optical properties, e.g. reduced haze and increased surface gloss.

According to a preferred embodiment of the present invention the polypropylene composition has a shear thinning index SHI (0/50) ≥ 14 and the film has a water vapour transmission rate < 2.00 g.m⁻².day⁻¹ (determined according to DIN 53122/1 on a 50 µm cast film).

Non-oriented polypropylene films with the above properties are particularly preferred, because they are the best suited substitutes for BOPP films where water barrier properties are concerned.

Films according to the invention may be produced by any method which is suitable for obtaining non-oriented films. Cast film technology, roll stack technology and rapid quenching technologies, e.g. waterbath or steel belt technology, are particularly preferred.

### Cast film technology

In this most simple technology for producing polymer films, the molten polymer is extruded through a slot die fed by a (normally single-screw) extruder onto a first cooled roll, the so-called chill-roll. From this roll, the already solidified film is taken up by a second roll (nip roll or takeup roll) and transported to a winding device after trimming the edges. Only a very limited amount of orientation is created in the film, which is determined by the ratio between die thickness and film thickness or the extrusion speed and the take-up speed, respectively.

Due to its technical simplicity, cast film technology is a very economical and easy-to-handle process. The films resulting from this technology usually have a thickness of from 30 to 500 µm and are characterised by good transparency and rather isotropic mechanical properties (limited stiffness, high toughness).

### Roll stack technology

Basically, this is an expansion of the cast film technology to allow higher film thickness, mostly for thermoforming applications. From the chill roll, the still partially molten film is transferred to a roll stack similar to a calendering setup, in which the final film thickness and orientation of the film are determined. The final film thickness can range from 300 to 2000 µm, orientation and anisotropy of the mechanical properties are low.

**Waterbath or steel-belt technology**: These processes are targeted at reaching very high cooling rates in the film forming process, thus reducing the film crystallinity and stiffness while optimising thermoforming properties and transparency. The molten film from a flat die is quenched immediately between polished steel belts cooled from the backside or in a cold water bath, from which it is taken to the winding device. Films produced this way have the lowest possible crystallinity and stiffness.

According to a still further advantageous embodiment of the present invention the polypropylene composition comprises a nucleating agent.

It is known that mechanical properties of polymers may be further improved by nucleation. For the present invention α-nucleation is preferred. A wide range of nucleating agents is suitable for accomplishing the desired degree of α-nucleation.
Of the possible α-nucleating agents the following are especially preferred:

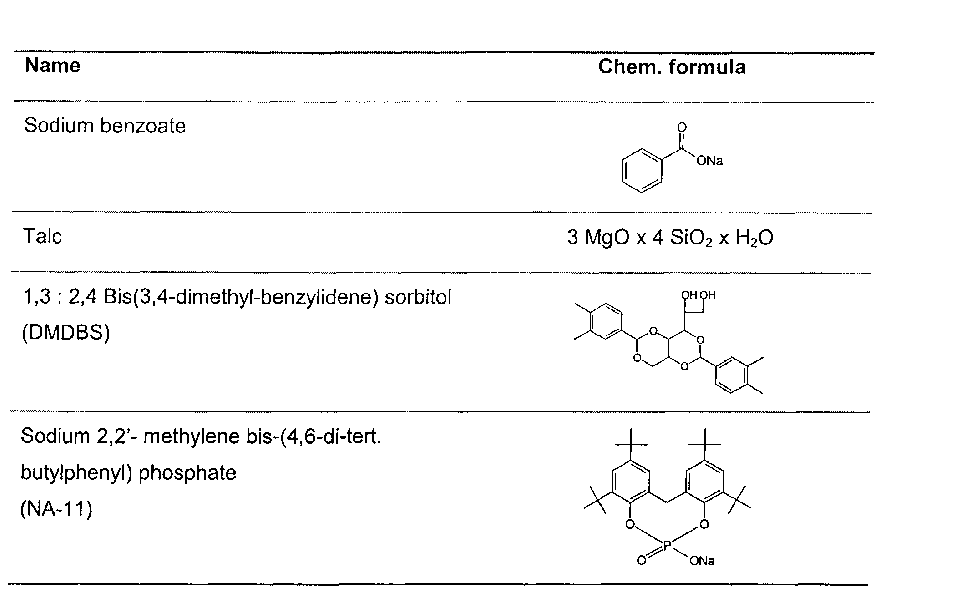

A further nucleation method, "CCPP" in the examples, is a special reactor technique, where the catalyst is prepolymerised with monomers like vinylcyclohexane (VCH). This method is described in greater detail in e.g. EP 0 316 187 A2.

In addition to the nucleating agents mentioned above, the use of long-chain branched polypropylene with high melt strength for nucleation purposes as outlined e.g. in US 6,077,907 is included. Like CCPP technology, this method avoids the addition of additional chemical substances, which could give rise to taste or odour problems.

It is a further object of the invention to provide a novel way of producing non-oriented polypropylene films with reduced water vapour transmission rates.

This object is achieved by using a polypropylene composition being comprised of a propylene homopolymer and/or a propylene random copolymer which comprises up to 1.5 wt% of one or more C₄-C₈ α-olefins and/or ethylene,
which polypropylene composition has an isotacticity ≥ 0.96,
a crystallisation temperature of T_{c} ≥ 120 °C (determined by DSC according to ISO 3146)
and a shear thinning index SHI (0/50) ≥ 10 (calculated from the flow curve at 200 °C) for the production of a non-oriented polypropylene film which has a reduced water vapour transmission rate.

According to an advantageous embodiment of the present invention the polypropylene film has a water vapour transmission rate of < 3.00 g.m⁻².day⁻¹ (determined according to DIN 53122/1 on a 50 µm cast film).

According to a further aspect of the invention a polypropylene composition is used which has a shear thinning index SHI (0/50) ≥ 14 and the film has a water vapour transmission rate < 2.00 g.m⁻².day⁻¹ (determined according to DIN 53122/1 on a 50 µm cast film)..

According to a still further aspect of the invention a polypropylene composition is used which is comprised of a propylene homopolymer which polypropylene composition has an isotacticity ≥ 0.96.

According to a still further aspect of the invention the polypropylene composition is coextruded into one of the layers of a two- or multi-layered film.

The films according to the invention can be utilised in a wide range of applications, especially in food or non-food packaging applications.

### Experimental Part

All films were produced from propylene homo- or copolymers, which are characterised by their analytical data in table1. The films were produced in cast film technology on a single screw extruder with a barrel diameter of 52 mm and a slot die of 800 x 0.5 mm in combination with a chill- and a takeup-roll. Melt temperature was 240 °C in the die; the chill-roll was kept at 15 °C and the takeup roll at 20 °C. A film thickness of 50 µm was adjusted through the ratio between extruder output and takeoff speed.

The films were tested an analysed as is outlined and described above. The results are shown in table 1.

Examples 1, 2 and 3 are according to the invention, examples C1 and C2 are comparative examples.

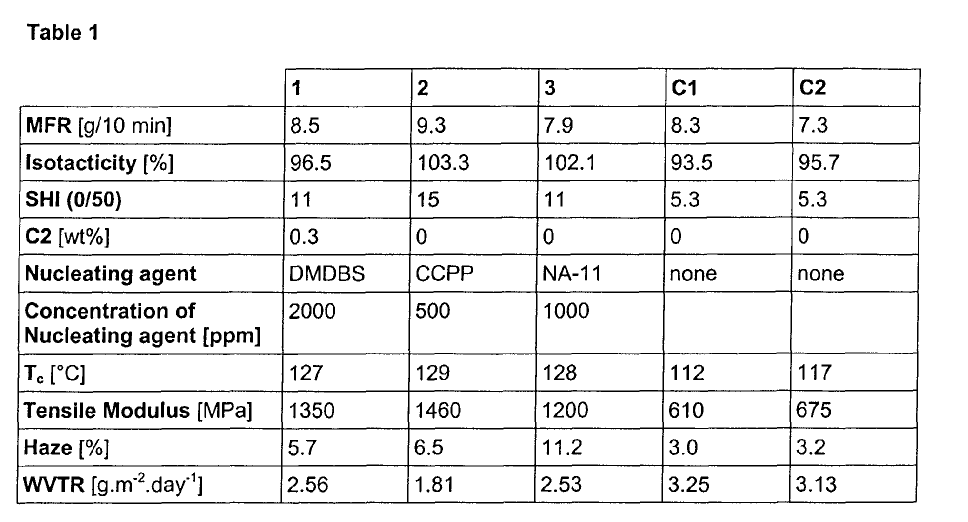

All of the inventive films show remarkably improved water barrier properties. Optical properties are maintained in an acceptable range.

## Claims

1. A non-oriented polypropylene film with reduced water vapour transmission rate comprised of a polypropylene composition **characterised in** the polypropylene composition being comprised of a propylene homopolymer and/or a propylene random copolymer which comprises up to 1.5 wt% of one or more C₄-C₈ α-olefins and/or ethylene,
which polypropylene composition has an isotacticity ≥ 0.96,
a crystallisation temperature of T_{c} ≥ 120°C (determined by DSC according to ISO 3146)
and a shear thinning index SHI (0/50) ≥ 10 (calculated from the flow curve at 200 °C).

2. A non-oriented polypropylene film according to claim 1, **characterised in that** the polypropylene composition is comprised of a propylene random copolymer which comprises 99.7 wt% of propylene and 0.3 wt% of ethylene.

3. A non-oriented polypropylene film according to any one of claims 1 or 2 **characterised in that** the polypropylene composition has a shear thinning index SHI (0/50) ≥ 14 and the film has a water vapour transmission rate < 2.00 g.m⁻².day⁻¹ (determined according to DIN 53122/1 on a 50 µm cast film).

4. A non-oriented polypropylene film according to any one of claims 1-3, **characterised in that** it is obtained by cast film technology.

5. A non-oriented polypropylene film according to any one of claims 1-3, **characterised in that** it is obtained by roll stack technology.

6. A non-oriented polypropylene film according to any one of claims 1-3, **characterised in that** it is obtained by rapid quenching technologies, preferably waterbath or steel belt technology.

7. A non-oriented polypropylene film according to any one of claims 1-6, **characterised in that** the polypropylene composition comprises a nucleating agent.

8. A non-oriented polypropylene film according to any one of claims 1-7, **characterised in that** it forms at least one of the layers of a two- or multi-layered film.

9. Use of a polypropylene composition being comprised of a propylene homopolymer and/or a propylene random copolymer which comprises up to 1.5 wt% of one or more C₄-C₈ α-olefins and/or ethylene,
which polypropylene composition has an isotacticity ≥ 0.96,
a crystallisation temperature of T_{c} ≥ 120 °C (determined by DSC according to ISO 3146)
and a shear thinning index SHI (0/50) ≥ 10 (calculated from the flow curve at 200 °C) for the production of a non-oriented polypropylene film which has a reduced water vapour transmission rate.

10. Use according to claim 9, **characterised in that** the polypropylene film has a water vapour transmission rate of < 3.00 g.m⁻².day⁻¹ (determined according to DIN 53122/1 on a 50 µm cast film).

11. Use according to claim 9-10, **characterised in that** the polypropylene composition has a shear thinning index SHI (0/50) ≥ 14 and the film has a water vapour transmission rate < 2.00 g.m⁻².day⁻¹ (determined according to DIN 53122/1 on a 50 µm cast film).

12. Use according to any one of claims 9-11, **characterised in that** the polypropylene composition is comprised of a propylene homopolymer which polypropylene composition has an isotacticity ≥ 0.96.

13. Use according to any one of claims 9-12, **characterised in that** the polypropylene composition is coextruded into at least one of the layers of a two- or multi-layered film.

14. Use of a polypropylene film according to any one of claims 1-8 in food or non-food packaging applications.
